Europäisches Patentamt

European Patent Office

Office européen des brevets

(19)

(11) Numéro de publication: **0 280 602**

**A1**

(12)

# DEMANDE DE BREVET EUROPEEN

(21) Numéro de dépôt: **88400251.0**

(22) Date de dépôt: **03.02.88**

(51) Int. Cl.4: **B 60 R 25/00**

(30) Priorité: **05.02.87 FR 8701425**
**09.10.87 FR 8714003**

(43) Date de publication de la demande:
**31.08.88   Bulletin   88/35**

(84) Etats contractants désignés: **DE ES GB IT SE**

(71) Demandeur: **Manzoni-Bouchot Société anonyme dite:**
**Zone Industrielle "Le Plan d'Acier" Boîte Postale No 9**
**F-39200 Saint-Claude  (FR)**

(72) Inventeur: **Manzoni, Bernard Antoine**
**Les Genevriers Avignon les St Claude**
**F-39200 Saint Claude  (FR)**

(74) Mandataire: **Thevenet, Jean-Bruno et al**
**Cabinet BEAU DE LOMENIE 55 rue d'Amsterdam**
**F-75008 Paris  (FR)**

(54) Dispositif de protection de sécurité et d'alarme pour véhicule automobile.

(57)   Des circuits électroniques (100) de neutralisation sont prévus pour empêcher le démarrage d'un moteur de véhicule à protéger en cas de tentative de mise en route du véhicule alors que les circuits de neutralisation (100) ont été mis en service par un interrupteur (10). Des moyens d'inhibition (112 à 118) permettent d'empêcher l'arrêt du moteur par les circuits (100) de neutralisation en cas d'actionnement intempestif de l'interrupteur (10) lorsque le moteur est en marche. Par ailleurs, un détecteur de présence humaine permet, grâce à un circuit (200), de déclencher de façon sûre en cas d'intrusion, à partir du signal de détection appliqué sur une entrée (6), une alarme lorsque les circuits (100, 200) ont été mis en service par l'interrupteur (10).

Fig.2

EP 0 280 602 A1

## Description

### Dispositif de protection de sécurité et d'alarme pour véhicule automobile.

La présente invention concerne un dispositif de protection de sécurité et d'alarme pour véhicule automobile, comprenant des circuits électroniques de neutralisation susceptibles d'être mis sélectivement en service par l'utilisateur pour neutraliser le fonctionnement d'un organe du véhicule en cas de tentative d'utilisation par un intrus.

On connait déjà de nombreux dispositifs électroniques de protection anti-vol pour véhicules automobiles.

Certains dispositifs ne visent qu'à déclencher une alarme ou une signalisation en cas de tentative d'intrusion dans le véhicule. Ces dispositifs peuvent comporter des détecteurs de présence humaine par exemple de type volumétrique, des moyens de détection de l'ouverture de portes, des moyens de détection de l'enlèvement d'accessoires tels que des roues ou encore des moyens de détection d'effraction (bris de glace, chocs). Ces dispositifs n'ont cependant qu'une efficacité limitée si le véhicule est situé dans un lieu isolé, car le dispositif de protection n'empêche pas l'utilisation du véhicule par un intrus après que l'alarme, dont le fonctionnement doit être limité dans le temps, a cessé de fonctionner.

D'autres dispositifs de protection anti-vol prévoient que la détection d'une intrusion provoque non seulement le déclenchement d'une alarme, mais également la neutralisation du véhicule, par exemple par coupure de l'allumage du moteur du véhicule. Ces dispositifs plus complets sont cependant plus complexes à mettre en oeuvre, ou ne présentent pas toutes les conditions requises d'efficacité ou de sécurité pour l'utilisateur du véhicule.

En particulier, un dispositif de protection risque d'être dangereux pour l'utilisateur autorisé du véhicule si la mise en service de ce dispositif est opérée intempestivement soit par le conducteur, soit par un passager, soit encore spontanément par suite d'une défaillance technique, alors que le véhicule est en circulation sur route avec une vitesse élevée. Dans ce cas, la mise en service par erreur d'un dispositif de neutralisation du véhicule est à même de provoquer un accident grave.

La présente invention vise précisément à éviter les inconvénients mentionnés ci-dessus et à permettre la mise en oeuvre en toute sécurité d'une protection efficace contre le vol d'un véhicule tout en conservant les avantages d'un dispositif présentant un volume réduit, un coût limité et une conception simple permettant une mise en oeuvre aisée.

Ces buts sont atteints grâce à un dispositif de protection de sécurité et d'alarme pour véhicule automobile, comprenant des circuits électroniques de neutralisation susceptibles d'être mis sélectivement en service par l'utilisateur pour neutraliser le fonctionnement d'un organe du véhicule en cas de tentative d'utilisation par un intrus, caractérisé en ce qu'il comprend :
- une première borne d'entrée connectée de manière à recevoir un signal de tension continue lorsqu'une tentative de mise en route du véhicule est effectuée par action sur la clé de contact du véhicule,
- des seconde et troisième bornes d'entrée interposées sur une ligne d'alimentation de l'organe à neutraliser,
- une quatrième borne d'entrée reliée à un détecteur d'un paramètre associé à la marche du moteur du véhicule à protéger,
- des moyens interrupteurs de mise en ou hors service des circuits de neutralisation par connexion à la masse ou déconnexion de la masse d'éléments déterminés des circuits de neutralisation,
- un premier relais incluant un contact branché entre lesdites seconde et troisième bornes d'entrée et normalement fermé en position de repos du relais, et une bobine d'excitation montée de manière à n'être alimentée sélectivement que lorsque les circuits de neutralisation sont en service et un signal de tension continue est délivré sur la première borne d'entrée, et
- des moyens d'inhibition connectés à la quatrième borne d'entrée et comprenant des premiers moyens de temporisation pour inhiber le fonctionnement des circuits de neutralisation en cas de mise en service de ceux-ci si des signaux de tension représentatifs d'une détection du paramètre associé à la marche du moteur sont délivrés sur la quatrième borne d'entrée et si des signaux de tension, ont déjà été émis sur la première borne d'entrée pendant un temps supérieur ou égal à la constante de temps desdits premiers moyens de temporisation.

Avec un tel dispositif, une défaillance de certains éléments de circuits ne peut pas conduire à une neutralisation intempestive du véhicule et cette neutralisation est dans tous les cas rendue impossible lorsque le véhicule est déjà en marche et en régime normal.

A titre complémentaire, et afin de provoquer une confusion chez un utilisateur non autorisé du véhicule, les circuits de neutralisation peuvent être rendus inopérants pendant une faible durée prédéterminée. Dans ce cas, les circuits de neutralisation comprennent en outre des deuxièmes moyens de temporisation pour retarder l'excitation de la bobine de relais pendant une faible durée prédéterminée après l'apparition d'un signal de tension sur la première borne d'entrée lorsque les circuits de neutralisation sont en service.

Selon un mode de réalisation particulier, les circuits de neutralisation comprennent un organe de commande de la bobine d'excitation constitué par un premier transistor dont une borne de l'espace collecteur-émetteur est reliée sélectivement à la masse par les moyens interrupteurs, dont l'autre borne de l'espace collecteur-émetteur est reliée à une borne de la bobine d'excitation et dont la base est commandée à partir de la première borne d'entrée raccordée à l'autre borne de la bobine d'excitation au moins par le montage série constitué d'une porte inverseuse, d'une résistance et d'une diode.

Les moyens d'inhibition comprennent entre la quatrième borne d'entrée et le point commun entre la diode et la résistance du circuit de commande du premier transistor, le montage série constitué d'une diode, de deux résistances, d'une porte inverseuse et d'une autre diode et les premiers moyens de temporisation comprennent le circuit parallèle constitué par un condensateur et une résistance connecté au point commun auxdites deux résistances.

Avantageusement, le dispositif de protection selon l'invention, comprend en outre un dispositif d'alarme mis en ou hors service à l'aide desdits moyens interrupteurs par connexion à la masse ou déconnexion de la masse d'éléments déterminés du dispositif d'alarme.

Dans ce cas, le dispositif d'alarme comprend une cinquième borne de liaison à un organe d'alarme ou de signalisation, une sixième borne de liaison à un accessoire du véhicule automobile dont le déplacement provoque une mise à la masse de cette sixième borne, un second relais comprenant un contact relié à la cinquième borne et une bobine d'excitation, un circuit d'excitation pour alimenter ladite bobine d'excitation, un circuit de blocage d'alarme pour inhiber sélectivement le circuit d'excitation, un troisième circuit de temporisation relié au circuit de blocage d'alarme pour maintenir celui-ci bloqué pendant un temps prédéterminé après la mise en service du dispositif d'alarme par les moyens interrupteurs, un quatrième circuit de temporisation connecté entre la sixième borne de liaison et le circuit de blocage d'alarme pour maintenir celui-ci bloqué pendant un temps prédéterminé après une mise à la masse de la sixième borne et un cinquième circuit de temporisation incorporé dans le circuit de blocage d'alarme pour provoquer un blocage de ce dernier circuit après une durée prédéterminée de fonctionnement du circuit d'excitation.

Selon un mode particulier de réalisation assurant une protection plus complète à l'aide d'un dispositif conservant une grande simplicité de structure et de fonctionnement, le dispositif d'alarme comprend en outre une septième borne de liaison à un accessoire du véhicule automobile dont le déplacement provoque une mise à la masse de cette septième borne, et un circuit d'auto-blocage interposé entre la septième borne et le circuit de blocage d'alarme pour provoquer un déblocage automatique et immédiat de ce dernier circuit lors de la mise à la masse de la septième borne.

Afin d'améliorer les performances du dispositif en augmentant la sensibilité et la fiabilité du dispositif d'alarme tout en réduisant les risques de déclenchement intempestif du dispositif d'alarme et en conservant la sécurité du fonctionnement des circuits de neutralisation du dispositif de protection et d'alarme, le dispositif de sécurité et d'alarme pour véhicule automobile selon l'invention, comprend en outre un dispositif d'alarme mis en ou hors service à l'aide desdits moyens interrupteurs par connexion à la masse ou déconnexion de la masse d'éléments déterminés du dispositif d'alarme et le dispositif d'alarme comprend une cinquième borne de liaison à un organe d'alarme ou de signalisation et une sixième borne de liaison à un circuit de détection d'une présence humaine qui comprend au moins un capteur de présence humaine constitué par un détecteur à infrarouge passif.

Selon un mode particulier de réalisation, dans lequel les circuits de neutralisation sont simplifiés et le nombre de fils de connexion du dispositif de protection est particulièrement réduit, le paramètre associé à la marche du moteur du véhicule à protéger est constitué par la présence d'une tension continue en aval du contact associé à la clé de contact du véhicule et les première et quatrième bornes d'entrée sont confondues.

Dans ce cas, les premiers moyens de temporisation des moyens d'inhibition connectés à la quatrième borne d'entrée peuvent être reliés à une source de tension d'alimentation continue stabilisée permanente dérivée de la batterie d'alimentation du véhicule.

Selon la présente invention, afin de garantir la fiabilité de la détection de présence humaine, le détecteur à infrarouge passif est muni de moyens de filtrage pour assurer une détection lorsqu'il détecte des variations de rayonnement infrarouge correspondant à une fréquence de variations située dans une plage de fré quences prédéterminée.

D'autres caractéristiques et avantages de l'invention ressortiront de la description suivante de modes particuliers de réalisation, donnés à titre d'exemple, en référence aux dessins annexés, sur lesquels :

- la figure 1 est le schéma de circuits de neutralisation et d'alarme d'un premier exemple de réalisation de dispositif de protection selon l'invention,

- la figure 2 est le schéma de circuits principaux de neutralisation et d'alarme d'un second exemple de dispositif de protection selon l'invention,

- la figure 3 est le schéma d'un circuit de mise en forme des signaux délivrés par un détecteur de présence humaine dans le cadre du dispositif de protection selon la figure 2, et

- la figure 4 représente le schéma des circuits d'alimentation du dispositif de protection des figures 2 et 3 à partir de la batterie d'un véhicule automobile.

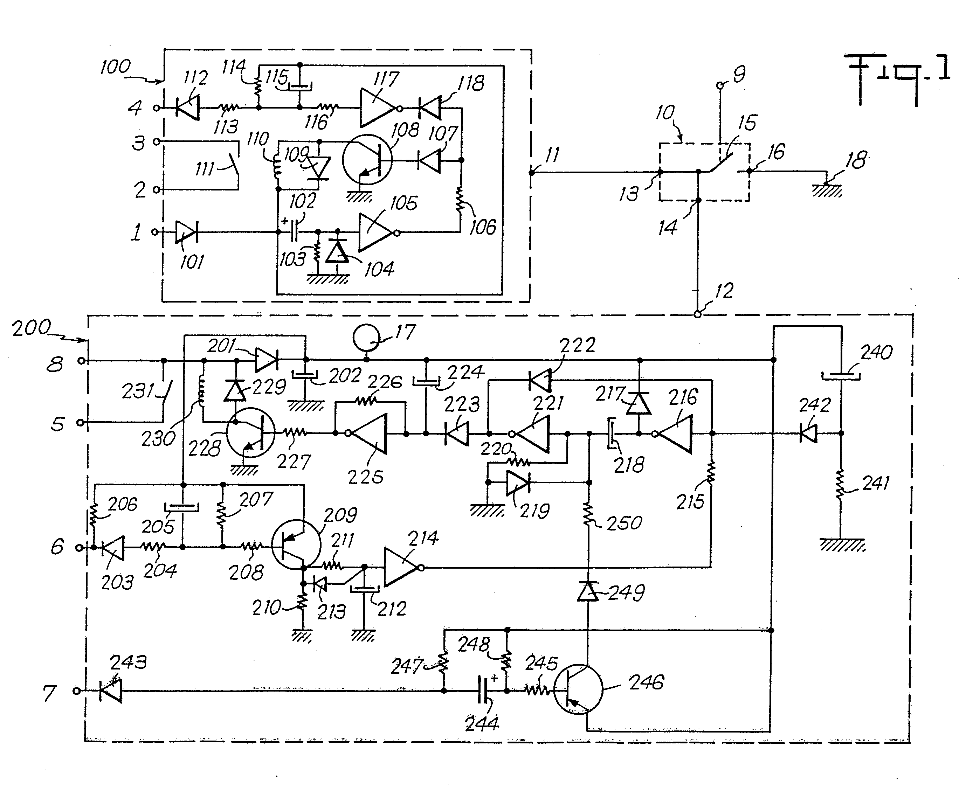

Sur la figure 1, on a représenté à l'intérieur d'un premier cadre en pointillés l'ensemble des éléments constituant des circuits de neutralisation 100, à l'intérieur d'un second cadre en pointillés l'ensemble des éléments constituant un dispositif d'alarme 200 et à l'intérieur d'un troisième cadre en pointillés les moyens interrupteurs 10 pour mettre sélectivement en ou hors service les circuits de neutralisation 100 ou le dispositif d'alarme 200.

Les moyens interrupteurs 10 comprennent un contact 15 qui peut être commandé à partir d'un commutateur caché dans le véhicule et agissant sur la borne 9, ou à partir d'un boîtier de télécommande classique. Le contact 15 permet de connecter les bornes 13 et 14 des moyens interrupteurs 10 à la borne 16 reliée en permanence à un point 18 qui, dans le véhicule, est à même de constituer une mise à la masse. Les différents points des circuits de neutralisation 100 qui, lorsque le dispositif de protection est en service, doivent être reliés à la masse, sont connectés à une borne 11 des circuits de neutralisation 100. De la même façon, les différents points du dispositif d'alarme 200 qui, lorsque le dispositif de protection est en service, doivent être reliés à la masse, sont connectés à une borne 12 du dispositif d'alarme 200. Les bornes 11 et 12 sont réunies aux bornes d'entrée 13 et 14 des moyens interrupteurs 10 de sorte que l'action sur ces moyens interrupteurs 10 suffit à rendre opérationnels ou non les circuits de neutralisation 100 et le dispositif d'alarme 200 par mise à la masse effective ou non à travers le contact 15 d'éléments essentiels du dispositif de protection.

Naturellement, à titre de variante, la borne 14 des moyens interrupteurs 10 pourrait être déconnectée de la borne 13 et reliée à la borne 16 par un contact supplémentaire indépendant du contact 15 afin de permettre une mise en service sélective du dispositif d'alarme 200, indépendante de la mise en service des circuits de neutralisation 100.

On décrira maintenant en premier lieu les circuits de neutralisation 100. Ceux-ci comportent une première borne d'entrée 1 qui peut être connectée de manière à recevoir un signal de tension continue positive à partir de la batterie d'alimentation du véhicule losque la clé de contact est actionnée, c'est-à-dire à chaque fois qu'une tentative de mise en marche du véhicule est effectuée. Des seconde et troisième bornes d'entrée 2, 3 sont interposées sur une ligne d'alimentation de l'organe à neutraliser. Il peut s'agir d'une ligne du circuit d'allumage du moteur ou de toute autre liaison électrique participant à la commande d'un organe essentiel à la mise en marche du moteur. Une quatrième borne d'entrée 4 est reliée à un détecteur d'un paramètre associé à la marche du moteur du véhicule et reflétant des conditions de fonctionnement en régime normal. Ce paramètre peut être par exemple la pression d'huile du moteur. Le détecteur doit lui-même être adapté pour délivrer un signal de tension continue positive représentant un niveau logique "1" lorsque le moteur est en marche et un signal de tension nulle représentant un niveau logique "0" lorsque le moteur est à l'arrêt ou en deça de son régime de marche normale.

Les circuits de neutralisation 100 comprennent essentiellement un relais 110, 111 avec un contact 111 qui est branché entre les bornes d'entrée 2 et 3 et se trouve fermé lorsque le relais est au repos, et une bobine d'excitation 110 sur laquelle est branchée en parallèle une diode de protection 109. La présence d'un contact 111 fermé lorsque la relais est au repos garantit que lorsque le dispositif de protection n'est pas en service aucune perturbation n'interviendra dans le fonctionnement du véhicule, même en cas de défaillance d'un élément quelconque du dispositif de protection.

La bobine de relais 110 présente une première extrémité reliée à la cathode d'une diode 101 dont l'anode est connectée à la borne 1, et une seconde extrémité reliée au collecteur d'un transistor de commande 108 dont l'émetteur est lui-même relié sélectivement à la masse, par l'intermédiaire des moyens interrupteurs 10. Là encore tout risque d'excitation intempestive du relais 110, 111 est exclu puisque l'émetteur du transistor 108 ne se trouve en mesure d'être conducteur que lorsque le dispositif de protection est mis en service par l'interrupteur 10.

Le transistor 108 est commandé par sa base à partir de la borne d'entrée 1 par l'intermédiaire du circuit série constitué par la diode 101, un circuit temporisateur 102, 103, 104, une porte inverseuse 105, une résistance 106 et une diode 107.

Le circuit temporisateur 102, 103, 104 comprend lui-même un circuit dérivateur constitué par un condensateur 102 connecté entre la diode 101 et la porte inverseuse 105, et le circuit parallèle constitué d'une résistance 103 et d'une diode 104 et monté entre l'entrée de la porte inverseuse 105 et la masse. La constante de temps du circuit temporisateur 102, 103, 104 est de préférence relativement faible, de l'ordre de quelques secondes et vise à ne permettre une excitation du relais 110, 111 qu'avec un léger retard par rapport à l'apparition d'un signal de tension sur la borne 1, et ainsi à augmenter la confusion d'un utilisateur non autorisé du véhicule.

Afin de garantir que les circuits de neutralisation 100 ne provoquent pas un arrêt involontaire du moteur du véhicule par suite d'une mise en service intempestive du dispositif de protection, des circuits d'inhibition de la commande du relais 110, 111 sont incorporés dans les circuits de neutralisation 100. Les moyens d'inhibition sont connectés entre la borne d'entrée 4 et l'anode de la diode 107 dont la cathode est connectée à la base du transistor 108. Ces moyens d'inhibition comprennent le circuit série composé d'une diode 112 dont la cathode est connectée à la borne 4, de deux résistances 113, 116, d'une porte inverseuse 117 et d'une diode 118 dont l'anode est connectée à l'anode de la diode 107. Des moyens de temporisation, comprenant le circuit parallèle constitué d'un condensateur 115 et d'une résistance 114, sont montés en outre entre le point commun aux résistances 113, 116 et le point de connexion de la diode 101 et du condensateur 102 à la bobine 110 du relais 110, 111. Les moyens de temporisation 114, 115 présentent une constante de temps très supérieure à celle des moyens de temporisation 102, 103, 104. A titre d'exemple, cette constante de temps peut être de l'ordre de 60 secondes. Les moyens de temporisation 114, 115 visent à empêcher l'inhibition du déclenchement du relais 110, 111 lorsque le véhicule n'est manifestement pas encore en marche normale et doit précisément être protégé contre toute tentative d'utilisation, ce qui est le cas dans une faible période de temps suivant l'apparition d'un signal de tension sur la borne 1. En principe, toute tentative d'utilisation non autorisée du véhicule doit provoquer une excitation du relais 110, 111 et empêcher toute mise en marche prolongée du moteur du véhicule, de sorte que pendant le temps où les moyens de temporisation 114, 115 agissent pour empêcher les moyens d'inhibition d'intervenir, aucun signal significatif de niveau "1" ne devrait apparaître sur la borne 4. Toutefois, la présence des moyens de temporisation 114, 115 constitue une sécurité qui garantit la fiabilité des circuits de neutralisation 100 au démarrage même si les signaux délivrés sur la borne 4 sont erronés.

Le fonctionnement des circuits de neutralisation 100 est le suivant. En l'absence de mise en service de ces circuits 100 par fermeture du contact 15 des moyens interrupteurs 10, l'émetteur du transistor 108 est déconnecté de la masse, de sorte que le relais 110, 111 ne peut en aucun cas être excité. Après fermeture du contact 15, le transistor 108 peut devenir conducteur si un signal de tension positive a été apliqué sur la borne 1 pendant une durée supérieure à la constante de temps du circuit 102,103, 104, c'est-à-dire pendant une durée supérieure au temps nécessaire à la charge du condensateur 102. Toutefois, si une durée supérieure à la constante de temps du circuit 114, 115 s'est écoulée et si un signal de niveau haut est appliqué sur la borne 4, ce qui correspond à un état de marche normale du véhicule, un niveau logique "0" est présent en sortie de la porte inverseuse 117 et le transistor 108 ne peut plus être rendu conducteur, quel que soit le niveau de signal appliqué en sortie de la porte inverseuse 105. Il s'ensuit que les moyens de neutralisation constitués par le transistor 108 et le relais 110, 111 sont bien inhibés.

On décrira maintenant le dispositif d'alarme 200 qui peut être mis en service parallèlement aux circuits de neutralisation 100 pour augmenter le caractère dissuasif du dispositif de protection.

Le dispositif d'alarme 200 comporte une borne 5 de liaison à un organe d'alarme ou de signalisation, non représenté sur le dessin, une borne 6 de liaison à un accessoire du véhicule automobile pouvant être de préférence la porte du conducteur et dont l'ouverture provoque une mise à la masse de cette borne 6, une borne 7 de liaison à un autre accessoire du véhicule automobile pouvant être par exemple un capot de moteur, un haillon de coffre, une porte autre que celle du conducteur, et dont l'ouverture provoque une mise à la masse de cette borne 7, et une borne 8 de liaison à une alimentation permanente en tension continue positive, qui peut être la batterie du véhicule ou une autre source d'alimentation autonome du dispositif de protection.

Le dispositif d'alarme 200 comprend un relais 230, 231 avec une bobine d'excitation 230 et un contact 231 relié à la borne 5 et pouvant être par exemple interposé entre les bornes 5 et 8 pour alimenter sélectivement l'organe d'alarme ou de signalisation. La bobine 230 montée en parallèle avec une diode de protection 229 est connectée entre la borne d'alimentation 8 et le collecteur d'un transistor 228 dont l'émetteur est relié à la masse lorsque le contact 15 des moyens interrupteurs 10 est fermé. Une ligne 17 d'alimentation positive des circuits du dispositif d'alarme 200 est reliée à la borne 8 par l'intermédiaire d'un circuit classique de stabilisation de tension comprenant une diode 201 et une condensateur 202.

Le transistor 228 peut assurer l'excitation de la bobine 230 du relais 230, 231, lorsqu'il est rendu conducteur par des circuits de commande qui ne peuvent être opérants que lorsque l'une au moins des bornes 6 et 7 est reliée à la masse par l'ouverture de l'élément associé du véhicule (porte, capot...).

On considérera tout d'abord une commande à partir de la borne 6. Un circuit de commande composé des éléments 203 à 215 délivre, avec un retard prédéterminé, en entrée d'un circuit de blocage composé des éléments 216 à 223 un signal de niveau bas lorsque la borne 6 a été mise à la masse, et sous réserve que le dispositif d'alarme 200 ait lui-même été mis en service par l'interrupteur 10 depuis un temps supérieur à la constante de temps d'un circuit de temporisation de sortie constitué d'un condensateur 240, d'une résistance 241 et d'une diode 242 et destiné à permettre à l'utilisateur autorisé du véhicule de maintenir la porte du conducteur ouverte durant un certain temps, par exemple de l'ordre de 30 secondes, après la mise en service du dispositif d'alarme 200, sans que la mise à la masse de la borne 6 qui s'ensuit déclenche une alarme.

Lorsqu'un signal de niveau bas a été appliqué par le circuit de commande 203 à 215 au circuit de blocage 216 à 223, ce dernier circuit autorise pendant une durée prédéterminée, par exemple de l'ordre de plusieurs dizaines de secondes, le fonctionnement d'un circuit oscillateur 224 à 227 interposé entre le circuit de blocage précité et la base du transistor 228. Lorsque le circuit oscillateur 224 à 227 est autorisé à fonctionner, le transistor 228 est rendu conducteur à la fréquence de l'oscillateur, par exemple de l'ordre du hertz, et assure ainsi une alimentation rythmée de la bobine 230 du relais 230, 231.

L'oscillateur 224 à 227 présente lui-même une structure très simple puisqu'il comporte essentiellement un condensateur 224 connecté entre la ligne d'alimentation 17 et la sortie du circuit de blocage 216 à 223 et une porte inverseuse unique 225. L'entrée de la porte inverseuse 225 est connectée à la sortie du circuit de blocage 216 à 223 tandis que la sortie de la porte 225 est reliée par l'intermédiaire d'une résistance 227 à la base du transistor 228. Une résistance 226 est en outre montée en parallèle sur la porte 225.

Le circuit de blocage 216 à 223 comprend lui-même successivement en série une première porte inverseuse 216, un condensateur 218, une seconde porte inverseuse 221 et une diode 223. Une diode 222 est en outre montée en parallèle entre l'entrée de la porte 216 et la sortie de la porte 221. Une diode 217 est également montée par son anode à la sortie de la porte 216 et par sa cathode à la ligne d'alimentation 17. Le point commun entre le condensateur 218 et l'entrée de la porte inverseuse 221 est en outre reliée à la masse par le circuit parallèle composé d'une résistance 220 et d'une diode 219 pour former avec le condensateur 218 un circuit temporisateur qui commande la durée de libération de l'oscillateur 224 à 227 par le circuit de blocage 216 à 223 après l'apparition d'un niveau bas en entrée du circuit de blocage.

Le circuit de commande 203 à 215 comprend un transistor 209 dont l'émetteur est connecté à la ligne d'alimentation 17 et le collecteur est relié à la masse par une résistance 210. La base du transistor 209 est elle-même reliée à la borne 6 par deux résistances 208, 204 et une diode 203 montées en série. Une résistance 206 est en outre connectée entre la ligne 17 et la borne 6 et le circuit parallèle composé d'un condensateur 205 et d'une résistance 207 est lui-même connecté entre la ligne 17 et le point commun aux résistances 204 et 208. Le circuit 205, 207 constitue un circuit de temporisation d'entrée, avec une constante de temps par exemple, de l'ordre de 10 à15 seconds, qui est destiné à empêcher la commande du relais 230, 231 pendant une faible durée suivant l'ouverture de la porte du conducteur afin de permettre à l'utilisateur autorisé du véhicule de mettre hors service le dispositif d'alarme 200 par action sur l'interrupteur 10 avant que l'alarme n'ait eu le temps de se déclencher.

Le collecteur du transistor 209 est relié à l'entrée d'une porte inverseuse 214 par une résistance 211 et une diode 213 montées en parallèle. Un condensateur 212 est en outre monté entre l'entrée de la porte 214 et la masse et une résistance de liaison 215 relie la sortie de la porte 214 à l'entrée de la porte 216.

Le fonctionnement de la commande du relais 230, 231 à partir de la borne 6 est le suivant. En l'absence de liaison à la masse par la borne 6, le transistor 209 reste bloqué et un signal de niveau logique "1" est appliqué à l'entrée de la porte 216 du circuit de blocage. Ce signal est transmis par les diodes 222 et 223 à l'entrée du circuit oscillateur 224 à 227 et empêche tout fonctionnement de celui-ci. Le transistor 228 reste lui-même bloqué.

Lorsqu'une liaison à la masse est effectuée par la borne 6, le condensateur 205 se charge pendant une durée prédéterminée correspondant à la constante de temps du circuit de temporisation d'entréee 205, 207, puis à la fin de cette durée prédéterminée rend conducteur le transistor 209 qui permet l'application d'un niveau logique "0" en entrée de la porte inverseuse 216 et sur l'anode de la diode 222. Un niveau logique "0" est alors appliqué également sur l'anode de la diode 223 tant que le condensateur 218 n'est pas chargé, de sorte que l'oscillateur est libre de fonctionner et rend conducteur périodiquement le transistor 228. A la fin de la constante de temps du circuit temporisateur 218, 219, 220, le condensateur 218 est chargé et réapplique un niveau logique "1" sur l'anode de la diode 223 bloquant ainsi l'oscillateur et arrêtant le fonctionnement du dispositif d'alarme.

Comme cela sera expliqué ci-après, le blocage de l'oscillateur 224 à 227 par le circuit de blocage 216 à 223 n'est pas définitif et la mise à la masse de la borne d'entrée 7 du dispositif d'alarme (par ouverture d'un organe tel qu'un capot ou une porte autre que celle du conducteur) permet de redéclencher l'alarme en réalisant un auto-déblocage du circuit de blocage 216 à 223.

La borne 7 est reliée par une diode 243, un condensateur 244, et une résistance 245, montés en série, à la base d'un transistor 246 dont l'émetteur est relié à la ligne 17 d'alimentation et le collecteur est relié par une diode 249 et une résistance de liaison 250 montées en série au point commun entre le condensateur 218 et l'entrée de la porte inverseuse 221. Deux résistances 247, 248 sont en outre connectées par une de leurs bornes de part et d'autre du condensateur 244 et par leur autre borne à la ligne d'alimentation 17.

Le fonctionnement du circuit de commande relié à la borne 7 est le suivant. Lors de la mise à la masse de la borne 7, le transistor 246, précédemment bloqué, est rendu conducteur pendant un court instant et provoque alors une décharge du condensateur 218 pour le cas où celui-ci aurait été chargé lors d'un déclenchement précédent d'alarme, notamment par mise à la masse de la borne 6.

L'oscillateur 224 à 227 peut alors être de nouveau libéré jusqu'à une nouvelle charge du condensateur 218 qui s'effectue pendant la durée prédéterminée de maintien du circuit de blocage 216 à 223. Un seul circuit de blocage 216 à 223 peut ainsi être utilisé avec des circuits de commande reliés à deux bornes différentes 6, 7 et peut fonctionner chaque fois de façon sûre.

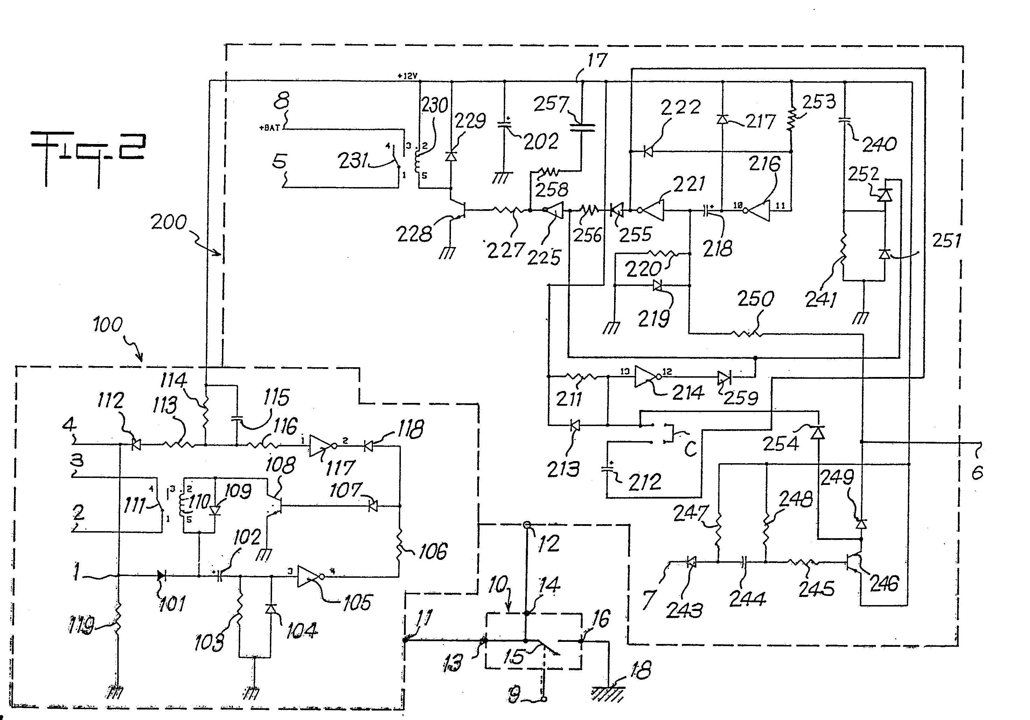

La figure 2 présente une variante de réalisation du dispositif qui vient d'être décrit en référence à la figure 1. Les éléments communs aux figures 1 et 2 portent les mêmes références et ne seront pas décrits de nouveau. Seules les caractéristiques additionnelles seront mises en évidence.

Selon la variante de réalisation de la figure 2 qui constitue un mode de mise en oeuvre simplifié dans lequel le nombre de fils de connexion est réduit, les bornes 1 et 4 des circuits de neutralisation 100 sont combinées en une borne unique et la borne 4 est ainsi, comme la borne 1, reliée à un point des circuits d'alimentation du véhicule situé en aval de la clé de contact, de sorte que le paramètre associé à la marche du moteur du véhicule est dans ce cas constitué par la fourniture d'un signal de tension continue positive à partir de la batterie d'alimentation du véhicule lorsque la clé de contact a été actionnée. Comme cela ressortira de la suite de la description, ce mode de réalisation simplifié présente toute la fiabilité désirée en ce qui concerne la sécurité.

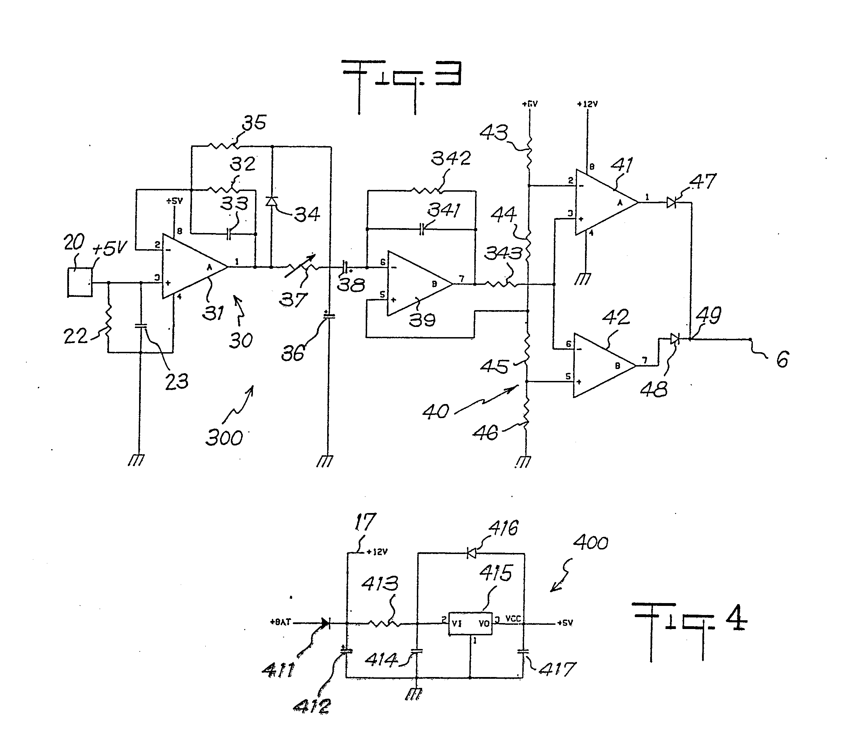

Selon la variante de la figure 2, dans les circuits de neutralisation 100, les moyens de temporisation comprenant le circuit parallèle constitué d'un condensateur 115 et d'une résistance 114, sont montés entre le point commun aux résistances 113, 116 et une ligne d'alimentation stabilisée sur laquelle est disponible en permanence une tension positive d'alimentation (+ 12V) dérivée de la batterie d'alimentation (Fig 4). Les moyens de temporisation 114, 115 présentent une constante de temps très supérieure à celle des moyens de temporisation 102, 103, 104. A titre d'exemple, cette constante de temps peut être de l'ordre de 60 secondes. Les moyens de temporisation 114, 115 visent à empêcher l'inhibition du déclenchement du relais 110, 111 lorsque le véhicule n'est manifestement pas encore en marche normale et doit précisément être protégé contre toute tentative d'utilisation, ce qui est le cas dans une faible période de temps suivant l'apparition d'un signal de tension sur les bornes 1 et 4. Ainsi, toute tentative d'utilisation non autorisée du véhicule provoque une excitation du relais 110, 111 et empêche toute mise en marche prolongée du moteur du véhicule pendant le temps où les moyens de temporisation 114, 115 agissent pour empêcher les moyens d'inhibition d'intervenir. Bien qu'un signal de niveau "1" soit apparu sur la borne 4 en même temps que sur la borne 1, la présence des moyens de temporisation 114, 115 constitue une sécurité qui garantit la fiabilité des circuits de neutralisation 100 au démarrage.

Le fonctionnement des circuits de neutralisation 100 est globalement le même dans le cas des modes de réalisation des figures 1 et 2 et ne sera donc pas décrit de nouveau. Dans tous les cas, les moyens de neutralisation constitués par le transistor 108 et le relais 110, 111 sont bien inhibés, si la mise en service des circuits de neutralisation 100 intervient de façon intempestive pendant la marche du véhicule.

Le dispositif d'alarme 200 de la figure 2 est légèrement différent de celui de la figure 1 dans la mesure où il comporte une borne 5 de liaison à un organe d'alarme ou de signalisation, non représenté sur le dessin, une borne 6 de liaison non pas à un accessoire du véhicule, mais à un dispositif 300 de détection de présence humaine (Fig 3) qui, lorsqu'il entre en actiondélivre un signal logique de niveau "1" sur cette borne 6, une borne 7 de liaison à un accessoire du véhicule automobile pouvant être par exemple un capot de moteur, un haillon de coffre, une porte, et dont l'ouverture provoque une mise à la masse de cette borne 7, et une borne 8 de liaison à une alimentation permanente en tension continue positive, qui peut être la batterie du véhicule ou une autre source d'alimentation autonome du dispositif de protection.

Le dispositif d'alarme 200 comprend un relais 230, 231 avec une diode de protection 229, qui coopère avec un transistor 228 comme dans le montage de la figure 1.

Le transistor 228 peut assurer l'excitation de la bobine 230 du relais 230, 231, lorsqu'il est rendu conducteur par des circuits de commande qui ne peuvent être opérants que lorsque la borne 6 reçoit un signal de niveau logique "1" produit par l'excitation du dispositif de détection de présence humaine 300 ou lorsque la borne 7 est mise à la masse par l'ouverture de l'élément associé du véhicule (porte, capot...).

La borne 6 est reliée par une résistance 250 à l'entrée d'une porte inverseuse 221 dont la sortie est reliée à l'anode d'une diode 255 dont la cathode est reliée par une résistance 256 à l'entrée d'une porte inverseuse 225 dont la sortie est reliée par une résistance 227 à la base du transistor 228. Le circuit série composé d'un condensateur 257 et d'une résistance 258 est connecté entre la ligne 17 et la sortie de la porte inverseuse 225.

Une résistance 220 est connectée entre la masse et le point commun à la résistance 250 et à l'entrée de la porte 221. Une diode 219 dont l'anode est à la masse est montée en parallèle sur la résistance 220.

Un condensateur 218 est connecté entre l'entrée de la porte 221 et la sortie d'une porte inverseuse 216 dont l'entrée est reliée par une résistance 253 à la ligne 17. Une diode 217 est reliée par sa cathode à la ligne 17 et par son anode à la sortie de la porte 216.

Un circuit de temporisation de sortie comprend un condensateur 240 et une résistance 241 montés en série entre la ligne 17 et la masse ainsi que des diodes 251, 252. La cathode de la diode 251 et l'anode de la diode 252 sont connectées au point commun entre le condensateur 240 et la résistance 241. L'anode de la diode 251 est à la masse tandis que la cathode de la diode 252 est connectée à l'entrée de la porte 225. La cathode de la diode 252 est en outre connectée à la cathode d'une diode 250 dont l'anode est connectée à la sortie d'une porte inverseuse 214 dont l'entrée est reliée à la ligne 17 par une résistance 211. Une diode 213 est montée en parallèle sur la résistance 211 avec sa cathode reliée à la ligne 17. L'entrée de la porte 214 est reliée par un cavalier amovible C à un condensateur 212 dont l'autre armature est connectée à la sortie de la porte 221. L'entrée de la porte 214 est par ailleurs connectée à la cathode d'une diode 254 dont l'anode est reliée au collecteur d'un transistor 246.

Les éléments 243 à 250 du circuit relié à la borne 7 ont déjà été décrits en référence à la figure 1 et conservent exactement la même structure et la même fonction dans le montage de la figure 2.

Ainsi, lors de la mise à la masse de la borne 7, le transistor 246, précédemment bloqué, est rendu conducteur pendant un court instant et provoque alors une décharge du condensateur 218 pour le cas où celui-ci aurait été chargé lors d'un déclenchement précédent d'alarme. Le transistor 228 peut alors être de nouveau rendu conducteur jusqu'à une nouvelle charge du condensateur 218 qui s'effectue pendant la durée prédéterminée de maintien du circuit de blocage 216 à 222. Un seul circuit de blocage 216 à 222 peut ainsi être utilisé avec des circuits de commande reliés à deux bornes différentes 6, 7 et peut fonctionner chaque fois de façon sûre.

Le circuit de blocage 216 à 222 maintient un signal de commande d'alarme sur le transistor 228 pendant une durée prédéterminée par le condensateur 218 et la résistance 220, qui peut être par exemple de l'ordre de 30 secondes, après la mise à la masse de la borne 7 ou après la fin de l'émission d'un signal de niveau haut sur la borne 6.

Le circuit composé du condensateur 240, de la résistance 241 et des diodes 251, 252 constitue un circuit de temporisation de sortie qui permet d'inhiber le dispositif d'alarme 200 pendant un temps prédéterminé, par exemple de l'ordre de 30 secondes, après la mise en service du dispositif d'alarme 200 par l'interrupteur 10. Ceci vise à permettre à l'utilisateur autorisé du véhicule de rester présent durant ledit temps prédéterminé après la mise en service du dispositif d'alarme 200 sans déclencher d'alarme même si un signal de détection devant normalement déclencher une alarme est présent sur la borne 6 ou la borne 7.

Lorsque le cavalier C est présent,le circuit 211, 212 constitue lui-même un circuit de temporisation d'entrée, avec une constante de temps par exemple de l'ordre de 10 à 15 secondes, qui est destiné à empêcher la commande du relais 230, 231 pendant une faible durée suivant le début de l'excitation du dispositif de détection de présence humaine 300 afin de permettre à l'utilisateur autorisé du véhicule de mettre hors service le dispositif d'alarme 200 par action sur l'interrupteur 10 avant que l'alarme n'ait eu le temps de se déclencher. Cette temporisation peut toutefois être supprimée si on le souhaite par simple déconnexion du cavalier C reliant le condensateur 212 à l'entrée de la porte inverseuse 214. Dans ce cas, l'alarme est déclenchée dès l'apparition d'un signal de niveau haut sur la borne 6.

Dans le cas de l'apparition d'un signal de niveau haut sur la borne 6 due à la détection d'une présence humaine dans le véhicule par le détecteur 20, le fonctionnement est le suivant.

Si le dispositif d'alarme vient d'être mis en service par l'utilisateur qui a lui-même fait l'objet d'une détection par le capteur 20, pendant la durée de la charge du condensateur 240, c'est-à-dire pendant la constante de temps du dispositif de temporisation de sortie, un niveau logique "1" est maintenu par la diode 252 en entrée de la porte 225. Le transistor 228 reste donc bloqué. En revanche, à la fin de la durée de temporisation de sortie, un niveau logique "0" est appliqué sur l'anode de la diode 252. Si un signal de niveau logique "0" est alors présent sur la borne 6 par suite de l'absence d'excitation du capteur infra-rouge 20, et si la borne 7 n'est pas non plus mise à la masse, la sortie de la porte 221 et l'entrée de la porte 225 sont au niveau logique "1". La sortie de la porte 225 est ainsi maintenue à un potentiel nul qui maintient bloqué le transistor 228.

Si en revanche un signal de niveau logique "1" apparait sur la borne 6 par suite de l'excitation du capteur infra-rouge 20, un signal de niveau "0" est transmis à la sortie de la porte 221 qui, par la diode 222 et la porte 216 assure un auto-maintien de l'alarme. Le signal de niveau "0" à la sortie de la porte 221 implique la disparition du signal de niveau "1" sur l'entrée de la porte 225 et par là même permet de rendre conducteur le transistor 228 et d'alimenter la bobine 230 du relais 230, 231 qui peut commander par exemple une sirène électronique.

Après la disparition du signal de niveau "1" sur la borne 6, l'alarme est maintenue pendant une durée déterminée par la constante de temps du circuit formé du condensateur 218 et de la résistance 220. Après la fin de l'alarme, le circuit 200 est prêt à fonctionner de nouveau en rendant conducteur le transistor 228 dès l'apparition d'un nouveau signal de niveau "1" sur la borne 6, ou dès une mise à la masse de la borne 7.

On décrira maintenant en référence à la figure 3 un dispositif de détection de présence humaine qui est raccordé à la borne 6 du circuit 200 de la figure 2 pour déclencher une alarme lorsqu'un intrus pénètre dans le véhicule automobile à protéger.

Le dispositif de détection de la figure 3 comprend essentiellement un capteur de présence humaine 20 du type à infrarouge passif qui est avantageusement muni de moyens de filtrage pour assurer une détection lorsqu'il détecte des variations de rayonnement infrarouge correspondant à une fréquence de variations située dans une plage de fréquences prédéterminée. De la sorte, le capteur est insensible aux variations lentes de température et ne peut pas non plus provoquer de fausses alarmes par suite de chocs, de vibrations ou de déplacement d'objets comme les détecteurs de type volumétrique par exemple.

Des capteurs de présence humaine à infrarouge passif répondant aux conditions requises pour une détection fiable dans le cadre de la présente invention tout en étant de faible encombrement et relativement peu coûteux peuvent être constitués par exemple par le capteur de la Société Siemens référencé LHl954 ou par le capteur de la Société RTC référencé RTC RPY97.

Les circuits 300 de mise en forme du signal issu du capteur à infrarouge passif 20 sont représentés sur la figure 3.

Le capteur 20 à infrarouge passif comprend une photodiode, dont une borne est reliée à une alimentation stabilisée + 5volts,laquelle diode est sensible au rayonnement infrarouge émis par toute personne ou tout animal qui tenterait de pénétrer dans le véhicule. La photodiode 20 devient conductrice lorsqu'elle reçoit un tel rayonnement infrarouge. Toute activation du capteur 20 conduit à l'émission d'un signal appliqué sur l'entrée non inverseuse d'un circuit comparateur 31, laquelle entrée non inverseuse est elle-même reliée à la masse par le circuit parallèle constitué d'une résistance 22 et d'un condensateur 23 qui joue le rôle de filtre vis à vis de signaux transitoires rapides. Le circuit du comparateur à seuil 30 comprend essentiellement un amplificateur opérationnel 31 dont l'entrée non inverseuse est reliée au capteur 20, tandis que l'entrée inverseuse est reliée à la masse par l'intermédiaire d'une résistance 35 et d'un condensateur 36 montés en série. Une diode 34 est reliée par son anode à la sortie de l'amplificateur opérationnel 31 et par sa cathode au point commun entre la résistance 35 et le condensateur 36. Une résistance 32 en parallèle sur un condensateur 33 est en outre connectée entre l'entrée inverseuse et la sortie de l'amplificateur 31.

Lorsqu'un signal est appliqué à l'entrée non inverseuse de l'amplificateur opérationnel 31 par suite d'une détection effectuée par le capteur 20, un signal de sortie variable dans le temps est présent en sortie de l'amplificateur opérationnel 31 et transmis par l'intermédiaire d'une résistance ajustable 37 et d'un condensateur de liaison 38 à l'entrée inverseuse d'un second amplificateur opérationnel 39. La résistance ajustable 37 permet d'effectuer, lors de la mise au point du dispositif, un réglage de sensibilité de la détection par le capteur 20 infrarouge passif.

L'amplificateur opérationnel 39 constitue avec deux autres amplificateurs opérationnels 41, 42 un circuit 40 de mise en forme des signaux transmis par le condensateur 38. Une résistance 342 et un condensateur 341 montés en parallèle sont connectés entre l'entrée inverseuse et la sortie de l'amplificateur opérationnel 39, elle même reliée par une résistance 343 à l'entrée non inverseuse de l'amplificateur opérationnel 41 et à l'entrée inverseuse de l'amplificateur opérationnel 42. L'entrée inverseuse de l'amplificateur opérationnel 41 est reliée à l'alimentation stabilisée + 5 volts par une résistance 43 et à l'entrée non inverseuse de l'amplificateur opérationnel 39 par une résistance 44 tandis que, de façon symétrique, l'entrée non inverseuse de l'amplificateur opérationnel 42 est reliée à la masse par une résistance 46 et à l'entrée non inverseuse de l'amplificateur opérationnel 39 par une résistance 45. Les sorties des amplicateurs opérationnels 41 et 42 sont connectées par des diodes 47 et 48 respectivement à un point commun 49 sur lequel un signal est présent lorsque le capteur 20 a été activé. Le point 49 est lui-même relié à la borne 6 précitée.

La figure 4 montre un circuit d'alimentation classique pouvant être utilisé en combinaison avec les circuits des figures 1 à 3. Ainsi, une tension d'alimentation stabilisée + 12 volts peut être prélevée par une ligne 17 à partir de la tension disponible en permanence sur la batterie + BAT, par l'intermédiaire d'un premier circuit de redressement filtrage comprenant une diode 411 et un condensateur 412.

Une tension stabilisée de par exemple + 5 volts permettant l'alimentation des circuits intégrés peut en outre être fournie sur une ligne 18 à partir de la tension stabilisée à + 12 volts à l'aide d'un circuit régulateur de tension 415 dont l'entrée est reliée par une résistance 413 au point commun à la diode 411 et au condensateur 412. Une diode 416 est en outre connectée par son anode à la sortie du circuit régulateur 415 et par sa cathode à l'entrée de ce même circuit 415 et les entrée et sortie de ce circuit 415 sont en outre reliées à la masse par des condensateurs 414, 417 respectivement.

**Revendications**

1. Dispositif de protection de sécurité et d'alarme pour véhicule automobile, comprenant des circuits électroniques de neutralisation (100) susceptibles d'être mis sélectivement en service par l'utilisateur pour neutraliser le fonctionnement d'un organe du véhicule en cas de tentative d'utilisation par un intrus, caractérisé en ce qu'il comprend :
   - une première borne d'entrée (1) connectée de manière à recevoir un signal de tension continue lorsqu'une tentative de mise en route du véhicule est effectuée par action sur la clé de contact du véhicule,
   - des seconde et troisième bornes d'entrée (2,3) interposées sur une ligne d'alimentation de l'organe à neutraliser,
   - une quatrième borne d'entrée (4) reliée à un détecteur d'un paramètre associé à la marche du moteur du véhicule à protéger,
   - des moyens interrupteurs (10) de mise en ou hors service des circuits de neutralisation (100) par connexion à la masse ou déconnexion de la masse d'éléments déterminés (108) des circuits de neutralisation,
   - un premier relais (110, 111) incluant un contact (111) branché entre lesdites seconde et troisième bornes d'entrée (2,3) et normalement fermé en position de repos du relais, et une bobine d'excitation (110) montée de manière à n'être alimentée sélectivement que lorsque les circuits de neutralisation (100) sont en service et un signal de tension continue est délivré sur la première borne d'entrée (1), et
   - des moyens d'inhibition (112 à 118) connectés à la quatrième borne d'entrée (4) et comprenant des premiers moyens de temporisation (114,115) pour inhiber le fonctionnement des circuits de neutralisation (100) en cas de mise en service de ceux-ci si des signaux de tension représentatifs d'une détection du paramètre associé à la marche du moteur sont délivrés sur la quatrième borne d'entrée (4) et si des signaux de tension, ont déjà été émis sur la première borne d'entrée (1) pendant un temps supérieur ou égal à la constante de temps desdits premiers moyens de temporisation (114, 115).

2. Dispositif de protection selon la revendication 1, caractérisé en ce que les circuits de neutralisation (100) comprennent un organe de commande de la bobine d'excitation (110) constitué par un premier transistor (108) dont une borne de l'espace collecteur-émetteur est reliée sélectivement à la masse par les moyens interrupteurs (10), dont l'autre borne de l'espace collecteur-émetteur est reliée à une borne de la bobine d'excitation (110) et dont la base est commandée à partir de la première borne d'entrée (1) raccordée à l'autre borne de la bobine d'excitation (110) au moins par le montage série constitué d'une porte inverseuse (105), d'une résistance (106) et d'une diode (107).

3. Dispositif de protection selon la revendication 1 ou la revendication 2, caractérisé en ce que les circuits de neutralisation (100) comprennent en outre des deuxièmes moyens de temporisation (102 à 104) pour retarder l'excitation de la bobine de relais (110) pendant une faible durée prédéterminée après l'apparition d'un signal de tension sur la première borne d'entrée (1) lorsque les circuits de neutralisation (100) sont en service.

4. Dispositif de protection selon la revendication 2, caractérisé en ce que les moyens d'inhibition (112 à 118) comprennent entre la quatrième borne d'entrée (4) et le point commun entre la diode (107) et la résistance (106) du circuit de commande du premier transistor (108), le montage série constitué d'une diode (112), de deux résistances (113, 116), d'une porte inverseuse (117) et d'une autre diode (118) et en ce que les premiers moyens de temporisation comprennent le circuit parallèle constitué par un condensateur (115) et une résistance (114) connecté au point commun auxdites deux résistances (113, 116).

5. Dispositif de protection selon l'une quelconque des revendications 1 à 4, caractérisé en ce qu'il comprend en outre un dispositif d'alarme (200) mis en ou hors service à l'aide desdits moyens interrupteurs (10) par connexion à la masse ou déconnexion de la masse d'éléments déterminés (228, 220, 241, 210, 212) du dispositif d'alarme (200).

6. Dispositif de protection selon la revendication 5, caractérisé en ce que le dispositif d'alarme (200) comprend une cinquième borne (5) de liaison à un organe d'alarme ou de signalisation, une sixième borne (6) de liaison à un accessoire du véhicule automobile dont le déplacement provoque une mise à la masse de cette sixième borne (6), un second relais (230, 231) comprenant un contact (231) relié à la cinquième borne (5) et une bobine d'excitation (230), un circuit d'excitation (224 à 228) pour alimenter ladite bobine d'excitation (230), un circuit de blocage d'alarme (216 à 223) pour inhiber sélectivement le circuit d'excitation (224 à 228), un troisième circuit de temporisation (240, 241, 242) relié au circuit de blocage d'alarme (216 à 223) pour maintenir celui-ci bloqué pendant un temps prédéterminé après la mise en service du dispositif d'alarme (200) par les moyens interrupteurs (10), un quatrième circuit de temporisation (203 à 215) connecté entre la sixième borne de liaison (6) et le circuit de blocage d'alarme (216 à 223) pour maintenir celui-ci bloqué pendant un temps prédéterminé après une mise à la masse de la sixième borne (6) et un cinquième circuit de temporisation (218, 219, 220) incorporé dans le circuit de blocage d'alarme (216 à 223) pour provoquer un blocage de ce dernier circuit après une durée prédéterminée de fonctionnement du circuit d'excitation (224 à 228).

7. Dispositif de protection selon la revendication 6, caractérisé en ce que le dispositif d'alarme (200) comprend en outre une septième borne (7) de liaison à un accessoire du véhicule automobile dont le déplacement provoque une mise à la masse de cette septième borne (7), et un circuit d'autodéblocage (243 à 250) interposé entre la septième (7) et le circuit de blocage d'alarme (216 à 223) pour provoquer un déblocage automatique et immédiat de ce dernier circuit lors de la mise à la masse de la septième borne (7).

8. Dispositif de protection selon la revendication 6 ou la revendication 7, caractérisé en ce que le circuit d'excitation (224 à 228; 257,258,225, 227,228) alimentant la bobine d'excitation (230) comprend un condensateur (224; 257), une porte inverseuse unique (225), des résistances (226, 227; 258, 227), et un transistor (228).

9. Dispositif de protection selon l'une quelconque des revendications 6 à 8, caractérisé en ce que le circuit de blocage d'alarme (216 à 223) comprend au moins une première porte inverseuse (216) un circuit de temporisation (218, 219, 220), une seconde porte inverseuse (221) et une diode (223; 255) connectées entre le quatrième circuit de temporisation (203 à 215) et le circuit d'excitation (224 à 228; 257, 258, 225, 227, 228).

10. Dispositif de protection selon la revendication 7 et la revendication 9, caractérisé en ce que le circuit d'auto-déblocage (243 à 250) comprend au moins un transistor (246), un condensateur (244), des résistances (245,247, 248, 250) et des diodes (243, 249) et se trouve connecté au circuit de blocage d'alarme (216 à 223) entre le circuit de temporisation (218, 219, 220) et la seconde porte inverseuse (221).

11. Dispositif de protection selon l'une quelconque des revendications 1 à 10, caractérisé en ce que les moyens interrupteurs (10) de mise en ou hors service des circuits de neutralisation (100) et le cas échéant du dispositif d'alarme (200) sont commandés par une télécommande.

12. Dispositif selon l'une quelconque des revendications 1 à 11, caractérisé en ce que la quatrième borne d'entrée (4) est reliée à un détecteur de la pression d'huile du moteur du véhicule à protéger.

13. Dispositif de protection de sécurité et d'alarme pour véhicule automobile selon la revendication 1, caractérisé en ce qu'il comprend en outre un dispositif d'alarme (200) mis en ou hors service à l'aide desdits moyens interrupteurs (10) par connexion à la masse ou déconnexion de la masse d'éléments déterminés (228, 220, 241) du dispositif d'alarme (200) et en ce que le dispositif d'alarme (200) comprend une cinquième borne (5) de liaison à un organe d'alarme ou de signalisation et une sixième borne(6) de liaison à un circuit (300) de détection d'une présence humaine qui comprend au moins un capteur (20) de présence humaine constitué par un détecteur à infrarouge passif.

14. Dispositif selon la revendication 13, caractérisé en ce que le paramètre associé à la marche du moteur du véhicule à protéger est constitué par la présence d'une tension continue en aval du contact associé à la clé de contact du véhicule et en ce que les première et quatrième bornes d'entrée (1, 4) sont confondues.

15. Dispositif selon la revendication 14, caractérisé en ce que les premiers moyens de temporisation(114, 115) des moyens d'inhibition (112 à 118) connectés à la quatrième borne d'entrée (4) sont reliés à une source de tension d'alimentation continue stabilisée permanente dérivée de la batterie d'alimentation du véhicule.

16. Dispositif selon l'une quelconque des revendications 13 à 15, caractérisé en ce que le détecteur à infrarouge passif est muni de moyens de filtrage pour assurer une détection lorsqu'il détecte des variations de rayonnement infrarouge correspondant à une fréquence de variations située dans une plage de fréquences prédéterminée.

Fig.1

0280602

FIG. 2

Fig. 3

Fig. 4

0280602

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 854 754 (AUDI NSU AUTO UNION AG)<br>* Figure 1 *<br>--- | 1-7 | B 60 R 25/00 |
| A | US-A-4 543 568 (HWANG)<br>* Figure 1; colonne 2, ligne 44 - colonne 3, ligne 41 *<br>--- | 1-6,8,9 | |
| A | FR-A-2 213 858 (WAGNER ELECTRIC CORP.)<br>* Résumé; figure 2 *<br>--- | 1-3 | |
| A | US-A-4 205 300 (HO)<br>* Résumé; figure 2 *<br>--- | 1-3 | |
| A | US-A-4 335 370 (SCALLEY)<br>* Résumé; figure 1 *<br>--- | 1-3 | |
| A | FR-A-2 250 165 (INTERNATIONAL DETECTION PROTECTION)<br>* Figure 1 *<br>--- | 1-3 | |
| A | WO-A-8 303 083 (IPARI MUSZERGYAR)<br>* Résumé; figure 1 *<br>--- | 1-3 | DOMAINES TECHNIQUES RECHERCHES (Int. Cl.4)<br><br>B 60 R |
| A | FR-A-2 416 513 (LE PERCHEC)<br>* Page 15 - page 16, line 5; figure 1 *<br>--- | 1-7 | |
| A | DE-C-3 410 888 (METZ APPARATEWERKE INH. PAUL METZ)<br>* Résumé *<br>--- | 13,16 | |
| A | DE-A-3 030 067 (ROBERT BOSCH GmbH)<br>* Page 12 *<br>--- | 13,16 | |
| A | US-A-4 222 034 (ORENZOW)<br>* Résumé *<br>----- | 13-16 | |

Le présent rapport a été établi pour toutes les revendications

| Lieu de la recherche | Date d'achèvement de la recherche | Examinateur |
|---|---|---|
| LA HAYE | 04-05-1988 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)